# EUROPEAN PATENT SPECIFICATION

(11) **EP 2 883 731 B1**
(45) Date of publication and mention of the grant of the patent: **19.10.2016**
(21) Application number: 13197375.2
(22) Date of filing: 16.12.2013
(51) Int. Cl.: B60K 6/387, B60K 6/405, B60K 6/52, F16H 63/04, F16H 63/30

(54) **Disconnector for hybrid vehicle**
Trennschalter für Hybridfahrzeug
Déconnecteur pour véhicule hybride

(43) Date of publication of application: 17.06.2015
(73) Proprietor: Hyundai Wia Corporation, Changwon-si, Gyeongsangnam-do 642-110 (KR)
(72) Inventor: Park, Ki Dong, 440-300 Gyeonggi-do (KR)
(74) Representative: Wablat Lange Karthaus

(56) References cited:
- US-A- 4 625 584
- US-A1- 2003 234 124
- US-A1- 2006 065 067
- US-A1- 2010 242 642

## Description

### Background of the Invention

### 1. Field of the Invention

The present invention relates to a disconnector for a hybrid vehicle, and more particularly, to a disconnector for a hybrid vehicle, which can accurately control interruption or transmission of rotary power by accurately measuring and monitoring a transfer distance of a shift fork using a linear sensor while interrupting or transmitting the rotary power of an engine or a motor using the shift fork.

### 2. Description of the Related Art

As fossil fuels are running out, development of hybrid vehicles using a combination of fossil fuel and electricity, instead of vehicles using fossil fuel such as gasoline or diesel, is underway.

The hybrid vehicle includes an engine generating rotary power by fossil fuel and a driving motor generating rotary power by electricity and is configured to interrupt or transmit the rotary power of the engine according to the necessity.

A technique of using an engine clutch to interrupt the rotary power of the engine is disclosed in Korean Patent Publication No. 10-2009-0024915 (March 10, 2009), entitled "Power transmission apparatus for a hybrid vehicle."

However, since the conventional hybrid vehicle uses a clutch to interrupt or transmit the rotary power of the engine, the efficiency of the engine may be lowered.

Furthermore is known a split axle drive mechanism for part-time four-wheel drive vehicle (US 4625584). This mechanism comprises a disconnector with the features of the preamble of claim 1, more specifically a clutch mechanism disengageable for disconnecting the first axle shaft from the first output member when the vehicle is in a two-wheel drive mode and engageable for connecting the first exit shaft to the first output member when the vehicle is in the four-wheel drive mode. An actuator is provided to shift a shift fork between two positions. Both positions can be detected by a sensing arrangement.

An activator with a linearly movable drive screw as part of a vehicle system is also known (US 2010/0242642 A1). This activator can be used in the drive system of a vehicle. Both end positions of the drive screw can be detected by a noncontact position sensing system.

### Brief Summary of the Invention

The present invention provides a disconnector for a hybrid vehicle, which can accurately control interruption or transmission of rotary power by accurately measuring and monitoring a transfer distance of a shift fork using a linear sensor while interrupting or transmitting the rotary power of an engine or a motor using the shift fork.

In accordance with the present invention, there is provided a disconnector according to claim 1, that includes an upper housing connected to a reducer, an input shaft installed inside the upper housing and transmitting rotary power of the reducer, bearings installed between the upper housing and the input shaft, a hub disposed under the input shaft, a sleeve having an inner circumferential surface spline-coupled to outer circumferential surfaces of the input shaft and the hub to then be shifted to transmit or interrupt the rotary power of the input shaft to the hub, a shift fork coupled to an outer circumferential surface of the sleeve and shifting the sleeve, a first spring installed between the upper housing and the shift fork, a lower case connected to a lower portion of the upper housing, a constant velocity joint connected to the hub through the inside of the lower case, a needle roller installed between the lower case and the constant velocity joint, an actuator coupled to the inside of the lower case and pushing out the shift fork, and a linear sensor sensing a transfer distance of the shift fork.

The actuator may include a motor generating rotary power, a lead screw converting a rotary motion into a linear motion, a cover mounted at a front end of the lead screw, a second spring installed between the lead screw and the cover, and a position sensor installed to be spaced apart from one side of the lead screw.

The disconnector may further include a controller controlling a motor of the actuator of the motor according to the transfer distance of the shift fork measured by the linear sensor.

The motor may be a reversible motor.

The shift fork may have an inclined surface formed at a region positioned to correspond to the linear sensor.

As described above, according to the present invention, interruption or transmission of rotary power can be accurately controlled by accurately measuring and monitoring a transfer distance of a shift fork using a linear sensor while interrupting or transmitting the rotary power of an engine or a motor using the shift fork.

Additional aspects and/or advantages of the invention will be set forth in part in the description which follows and, in part, will be obvious from the description, or may be learned by practice of the invention.

### Brief Description of the Drawings

The objects, features and advantages of the present invention will be more apparent from the following detailed description in conjunction with the accompanying drawings, in which:
FIG. 1 is a perspective view illustrating an assembled state of a disconnector for a hybrid vehicle according to an embodiment of the present invention;
FIG. 2 is a front view of the disconnector for a hybrid vehicle shown in FIG. 1;
FIG. 3 is a cross-sectional view taken along the line A-A of FIG. 2;
FIG. 4 is a cross-sectional view taken along the line B-B of FIG. 2, illustrating a case of interrupting power;
FIG. 5 is a cross-sectional view taken along the line B-B of FIG. 2, illustrating a case of transmitting power;
FIG. 6 is a perspective view of a shift fork of the disconnector for a hybrid vehicle shown in FIG. 1; and
FIG. 7 is a cross-sectional view taken along the line C-C of FIG. 6.

### Detailed Description of the Invention

Hereinafter, examples of embodiments of the invention will be described in detail with reference to the accompanying drawings such that they can easily be made and used by those skilled in the art. Advantages and features of the present invention and methods of accomplishing the same may be understood more readily by reference to the following detailed description of preferred embodiments and the accompanying drawings.

However, the following descriptions of such embodiments are intended primarily for illustrating the principles and exemplary constructions of the present invention, and the present invention as defined in the appended claims is not specifically limited to these exemplary embodiments.

In addition, it should be understood that the terms and words used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation for the invention. For the sake of convenience, an orientation is set on the basis of illustration of figures.

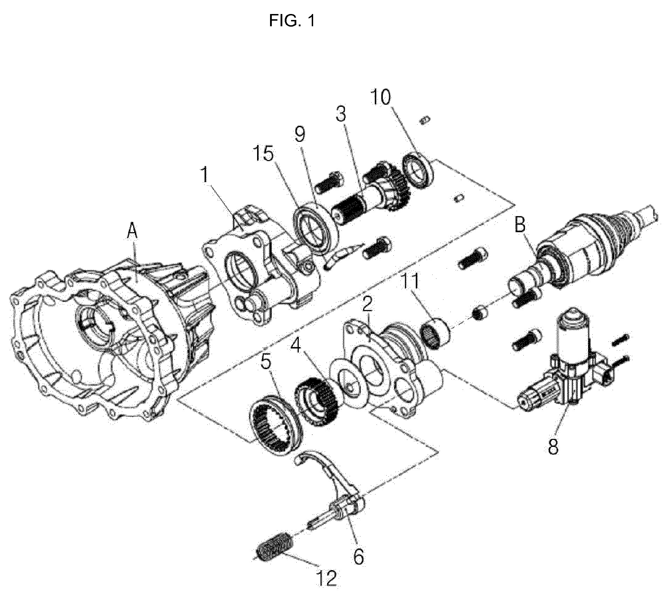

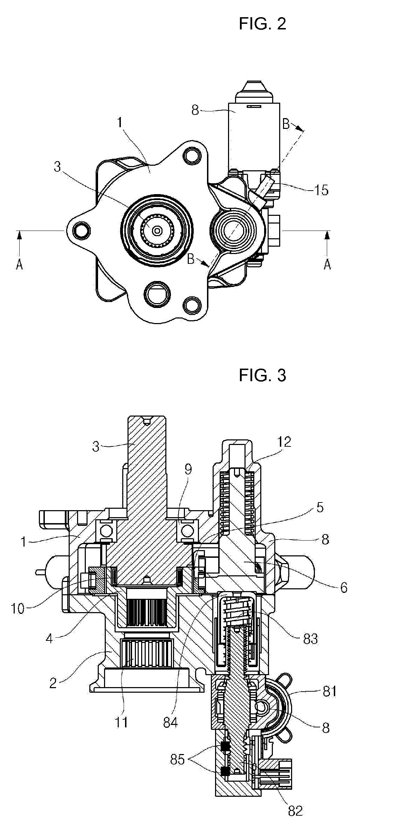

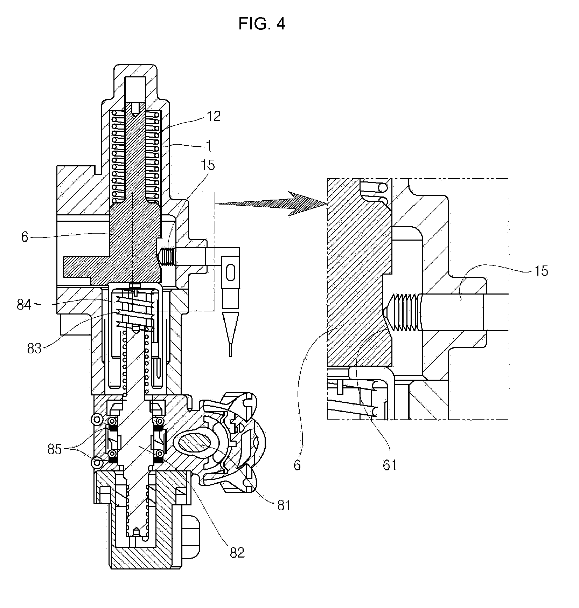

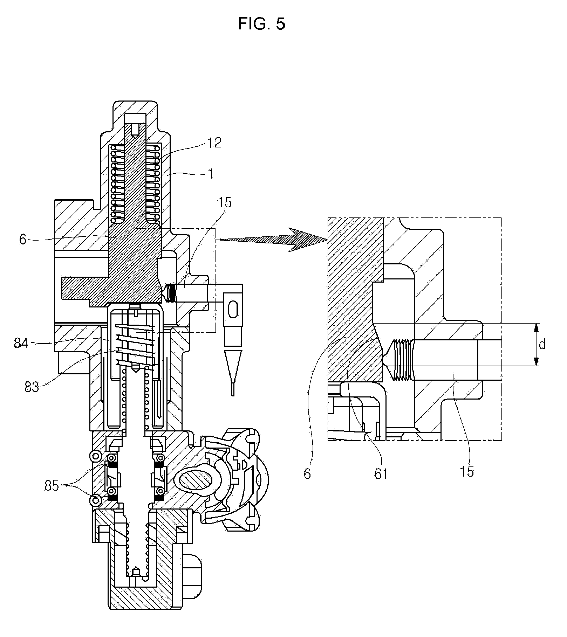

FIG. 1 is a perspective view illustrating an assembled state of a disconnector for a hybrid vehicle according to an embodiment of the present invention, FIG. 2 is a front view of the disconnector for a hybrid vehicle shown in FIG. 1, FIG. 3 is a cross-sectional view taken along the line A-A of FIG. 2, FIG. 4 is a cross-sectional view taken along the line B-B of FIG. 2, illustrating a case of interrupting power, and FIG. 5 is a cross-sectional view taken along the line B-B of FIG. 2, illustrating a case of transmitting power.

As shown in FIGS. 1 to 5, the disconnector for a hybrid vehicle according to an embodiment of the present invention includes an upper housing 1 connected to a reducer A, an input shaft 3 installed inside the upper housing 1 and transmitting rotary power of the reducer A, bearings 9 and 10 installed between the upper housing 1 and the input shaft 3, a hub 4 disposed under the input shaft 3, a sleeve 5 having an inner circumferential surface spline-coupled to outer circumferential surfaces of the input shaft 3 and the hub 4 to then be shifted to transmit or interrupt the rotary power of the input shaft 3 to the hub 4, a shift fork 6 coupled to an outer circumferential surface of the sleeve 5 and shifting the sleeve 5, a first spring 12 installed between the upper housing 1 and the shift fork 6, a lower case 2 connected to a lower portion of the upper housing 1, a constant velocity joint B connected to the hub 4 through the inside of the lower case 2, a needle roller 11 installed between the lower case 2 and the constant velocity joint B, an actuator 8 coupled to the inside of the lower case 2 and pushing out the shift fork 6, and a linear sensor 15 sensing a transfer distance of the shift fork 6.

The actuator 8 includes a motor 81 generating rotary power, a lead screw 82 converting a rotary motion of the motor 81 into a linear motion, a cover 84 mounted at a front end of the lead screw 82, a second spring 83 installed between the lead screw 82 and the cover 84, and a position sensor 85 installed to be spaced apart from one side of the lead screw 82.

A reversible motor is used as the motor 81.

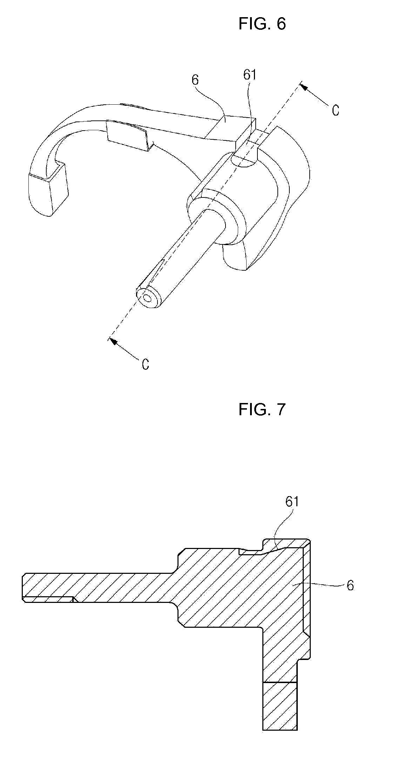

FIG. 6 is a perspective view of a shift fork of the disconnector for a hybrid vehicle shown in FIG. 1 and FIG. 7 is a cross-sectional view taken along the line C-C of FIG. 6.

As shown in FIG. 6, in the disconnector for a hybrid vehicle according to an embodiment of the present invention, the shift fork 6 has an inclined surface 61 formed at a region positioned to correspond to the linear sensor 15.

The aforementioned disconnector for a hybrid vehicle according to an embodiment of the present invention operates as follows.

If power is applied to the actuator 8 to transfer rotary power from the reducer A to the constant velocity joint B, the rotary power is generated from the motor 81 and the lead screw 82 converts a rotary motion of a rotary shaft of the motor 81 into a linear motion to transfer the linear motion to the cover 84. Here, a transfer completion position of the lead screw 82 is sensed by the position sensor 85.

If the lead screw 82 pushes the cover 84, the cover 84 lifts the shift fork 6 while exhibiting a buffering action derived from an elastic force of the second spring 83. Accordingly, the shift fork 6 shifts the sleeve 5 coupled to the hub 4 toward the input shaft 3, thereby commonly coupling the sleeve 5 to the hub 4 and the input shaft 3. Here, the linear sensor 15 is installed at a region corresponding to the inclined surface 61 of the shift fork 6 to measure a transfer distance of the shift fork 6, thereby accurately controlling the transfer distance of the shift fork 6.

If the shift fork 6 shifts the sleeve 5 toward the input shaft 3 in such a manner, the input shaft 3 and the hub 4 separated from each other by the sleeve 5 are coupled to each other, thereby transmitting the rotary power of the reducer A transmitted through the input shaft 3 to the hub 4 to be combined with the rotary power of the constant velocity joint B.

If the motor 81 of the actuator 8 is rotated in the opposite direction to interrupt transmission of the rotary power from the reducer A to the constant velocity joint B, the lead screw 82 returns to its original position. Here, the transfer completion position of the lead screw 82 is sensed by the position sensor 85.

If the lead screw 82 returns to its original position, the shift fork 6 is pushed out by a restoring force of the first spring 12 installed between the upper housing 1 and the shift fork 6, thereby shifting the sleeve 5 commonly coupled to the hub 4 and the input shaft 3 to separate the hub 4 and the input shaft 3 from each other. Here, the transfer distance of the shift fork 6 is measured by the linear sensor 15 installed at the region positioned to correspond to the inclined surface 61 of the shift fork 6, so that a controller(not shown) can accurately control the transfer distance of the shift fork 6.

If the shift fork 6 shifts the sleeve 5 commonly coupled to the hub 4 and the input shaft 3 in the above-described a manner, the input shaft 3 and the hub 4 are separated from each other by the sleeve 5. Accordingly, the rotary power of the reducer a transmitted through the input shaft 3 is not transmitted to the hub 4, so that the constant velocity joint B does not rotate.

## Claims

1. A disconnector for a hybrid vehicle, comprising:
an upper housing (1) connected to a reducer (A);
an input shaft (3) installed inside the upper housing (1) and transmitting rotary power of the reducer (A);
bearings (9, 10) installed between the upper housing (1) and the input shaft (3);
a hub (4) disposed under the input shaft (3);
a sleeve (5) having an inner circumferential surface spline-coupled to outer circumferential surfaces of the input shaft (3) and the hub (4) to then be shifted to transmit or interrupt the rotary power of the input shaft (3) to the hub (4);
a shift fork (6) coupled to an outer circumferential surface of the sleeve (5) and shifting the sleeve (5);
a first spring (12) installed between the upper housing (1) and the shift fork (6); a lower case (2) connected to a lower portion of the upper housing (1);
a constant velocity joint (B) connected to the hub (4) through the inside of the lower case (2);
a needle roller (11) installed between the lower case (2) and the constant velocity joint (B);
an actuator (8) coupled to the inside of the lower case (2) and pushing out the shift fork (6); and a sensor (15)
**characterized in that**
the sensor is a linear sensor (15) sensing a transfer distance of the shift fork (6) and a controller is provided to accurately control the transfer distance of the shift fork (6).

2. The disconnector of claim 1, wherein the actuator (8) comprises:
a motor (81) generating rotary power;
a lead screw (82) converting a rotary motion into a linear motion;
a cover (84) mounted at a front end of the lead screw (82);
a second spring (83) installed between the lead screw (82) and the cover (84); and
a position sensor (85) installed to be spaced apart from one side of the lead screw (82).

3. The disconnector of claim 2, further comprising a controller controlling a motor (81) of the actuator of the motor according to the transfer distance of the shift fork (6) measured by the linear sensor (15).

4. The disconnector of claim 2 or 3, wherein the motor (81) is a reversible motor.

5. The disconnector of claim 1, wherein the shift fork (6) has an inclined surface (61) formed at a region positioned to correspond to the linear sensor (15).

## Patentansprüche

1. Unterbrecher für ein Hybridfahrzeug, umfassend:
ein oberes Gehäuse (1), das mit einem Reduzierstück (A) verbunden ist;
eine Eingangswelle (3), die innerhalb des oberen Gehäuses (1) angebracht ist und ein Drehungsvermögen des Reduzierstücks (A) überträgt;
Lager (9, 10), die zwischen dem oberen Gehäuse (1) und der Eingangswelle (3) angebracht sind;
eine Nabe (4), die unter der Eingangswelle (3) angeordnet ist;
eine Hülse (5), die eine innere Umfangsfläche aufweist, die mit äußeren Umfangsflächen der Eingangswelle (3) und der Nabe (4) längsnutgekoppelt ist, um dann verschoben zu werden, um das Drehungsvermögen der Eingangswelle (3) auf die Nabe (4) zu übertragen oder es zu unterbrechen;
eine Schaltgabel (6), die mit einer äußeren Umfangsfläche der Hülse (5) gekoppelt ist und die Hülse (5) verschiebt;
eine erste Feder (12), die zwischen dem oberen Gehäuse (1) und der Schaltgabel (6) angebracht ist; ein unteres Gehäuse (2), das mit einem unteren Abschnitt des oberen Gehäuses (1) verbunden ist;
ein Gleichlaufgelenk (B), das mit der Nabe (4) durch das Innere des unteren Gehäuses (2) verbunden ist;
eine Nadelrolle (11), die zwischen dem unteren Gehäuse (2) und dem Gleichlaufgelenk (B) angebracht ist;
ein Stellglied (8), das mit dem Inneren des unteren Gehäuses (2) gekoppelt ist und die Schaltgabel (6) hinausdrückt; und einen Sensor (15),
**dadurch gekennzeichnet, dass**
der Sensor ein Linearsensor (15) ist, der eine Übertragungsentfernung der Schaltgabel (6) erfasst, und eine Steuerung vorgesehen ist, um die Übertragungsentfernung der Schaltgabel (6) exakt zu steuern.

2. Unterbrecher nach Anspruch 1, wobei das Stellglied (8) umfasst:
einen Motor (81), der ein Drehungsvermögen erzeugt;
eine Leitspindel (82), die eine Rotationsbewegung in eine Linearbewegung umwandelt;
eine Abdeckung (84), die an einem Vorderende der Leitspindel (82) befestigt ist;
eine zweite Feder (83), die zwischen der Leitspindel (82) und der Abdeckung (84) angebracht ist; und
einen Positionssensor (85), der derart angebracht ist, dass er von einer Seite der Leitspindel (82) beabstandet ist.

3. Unterbrecher nach Anspruch 2, weiter umfassend eine Steuerung, die einen Motor (81) des Stellglieds des Motors gemäß der Übertragungsentfernung der Schaltgabel (6) steuert, die durch den Linearsensor (15) gemessen wird.

4. Unterbrecher nach Anspruch 2 oder 3, wobei der Motor (81) ein Umkehrmotor ist.

5. Unterbrecher nach Anspruch 1, wobei die Schaltgabel (6) eine geneigte Fläche (61) aufweist, die in einem Bereich gebildet ist, der derart positioniert ist, dass er dem Linearsensor (15) entspricht.

## Revendications

1. Sectionneur pour un véhicule hybride, comprenant :
un boîtier supérieur (1) relié à un réducteur (A) ;
un arbre d'entrée (3) installé à l'intérieur du boîtier supérieur (1) et transmettant une puissance de rotation au réducteur (A) ;
des paliers (9, 10) installés entre le boîtier supérieur (1) et l'arbre d'entrée (3) ;
un moyeu (4) disposé sous l'arbre d'entrée (3) ;
un manchon (5) présentant une surface circonférentielle intérieure accouplée par cannelures à des surfaces circonférentielles extérieures de l'arbre d'entrée (3) et du moyeu (4), pour ensuite être coulissé de manière à transmettre ou interrompre la puissance de rotation de l'arbre d'entrée (3) au moyeu (4) ;
une fourchette d'embrayage (6) accouplée à une surface circonférentielle extérieure du manchon (5), et faisant coulisser le manchon (5) ;
un premier ressort (12) installé entre le boîtier supérieur (1) et la fourchette d'embrayage (6) ; un étui inférieur (2) relié à une partie inférieure du boîtier supérieur (1) ;
un joint à vitesse constante (B) relié au moyeu (4) par le biais de l'intérieur de l'étui inférieur (2) ;
un roulement à aiguilles (11) installé entre l'étui inférieur (2) et le joint à vitesse constante (B) ;
un actionneur (8) accouplé à l'intérieur de l'étui inférieur (2) et poussant la fourchette d'embrayage (6) vers l'extérieur ; et un capteur (15) ;
**caractérisé en ce que**
le capteur est un capteur linéaire (15) détectant une distance de transfert de la fourchette d'embrayage (6) et **en ce qu'**un dispositif de commande est prévu pour ajuster avec précision la distance de transfert de la fourchette d'embrayage (6).

2. Sectionneur selon la revendication 1, dans lequel l'actionneur (8) comprend :
un moteur (81) générant une puissance de rotation ;
une vis-mère (82) convertissant un mouvement de rotation en un mouvement linéaire ;
un couvercle (84) monté à une extrémité avant de la vis-mère (82) ;
un deuxième ressort (83) installé entre la vis-mère (82) et le couvercle (84) ; et
un capteur de position (85) installé de manière à être espacé d'un côté de la vis-mère (82).

3. Sectionneur selon la revendication 2, comprenant en outre un dispositif de commande destiné à commander un moteur (81) de l'actionneur du moteur en fonction de la distance de transfert de la fourchette d'embrayage (6) mesurée par le capteur linéaire (15).

4. Sectionneur selon la revendication 2 ou 3, dans lequel le moteur (81) est un moteur réversible.

5. Sectionneur selon la revendication 1, dans lequel la fourchette d'embrayage (6) présente une surface inclinée (61) formée dans une région positionnée de manière à correspondre au capteur linéaire (15).
